# EUROPEAN PATENT SPECIFICATION

(11) **EP 0 870 414 B1**
(45) Date of publication and mention of the grant of the patent: **21.02.2001**
(21) Application number: 96944036.1
(22) Date of filing: 14.12.1996
(51) Int. Cl.: H04Q 11/04

(54) **FIFO STORAGE AND SHARED BUFFER SWITCHING DEVICE FOR CONNECTION NETWORKS IN ATM ARCHITECTURAL AND APPLICATIONS**
FIFO SPEICHER UND VERMITTLUNGSSTELLE MIT GEMEINSAMEM PUFFER IN ATM ARCHITEKTUR UND ANWENDUNGEN
DISPOSITIF DE MEMOIRE PREMIER ENTRE PREMIER SORTI ET DE COMMUTATION DE TAMPON PARTAGE POUR RESEAUX DE COMMUNICATIONS A ARCHITECTURE MTA, ET APPLICATIONS

(30) Priority: 22.12.1995 IT MI952726
(43) Date of publication of application: 14.10.1998
(73) Proprietor: Italtel S.p.a., 20154 Milano (IT); Siemens Information and Communication Networks S.p.A., 20126 Milano (IT)
(72) Inventor: CELANT, Angelo, I-20125 Milano (IT); BALZAROTTI, Dario, I-20011 Corbetta (IT)
(74) Representative: Giustini, Delio
(86) International application number: EP9605745
(87) International publication number: WO9723968

(56) References cited:
- EP-A- 0 378 195
- EP-A- 0 652 685
- EP-A- 0 685 976

## Description

### Technical Field

In a general way the present invention relates to communication systems using a digital technology called fast cell switching or ATM (Asynchronous Transfer Mode) for the transportation of voice, video and data signals.

More in particular the invention relates to a FIFO storage and shared buffer switching device for cells of the ATM type.

The ATM technology becomes more and more important in integrated switching of digital signal flows belonging to services for the transmission of voice, video and data signals with different bandwidth requirements and specialized traffic characteristics.

The ATM technology foresees in particular that the data related to the various services are arranged in contiguous units with a fixed length of 53 Bytes (424 bits) called cells. Such cells contain further to the real data a header carrying among others the informations which are necessary for the routing of the cell through the geographic network.

The connection systems having the task to switch especially the cells from one input gate to an output gate must be suitable to clear off big traffic volumes in the range of hundreds of Gbit/s.

Inside the connection systems realized in ATM technology there are multiple points where it is necessary to provide for temporary storage functions for the cells which, arriving from several inputs, must be sent in a controlled and systematic way towards different outputs.

For example inside a switching node it may happen that two or more cells arriving from different inputs have to join contemporaneously the same output gate. In this case the temporary cell storage function turns out to be necessary to maintain such cells in standby for the availability of the output gate. In this case it turns out to be necessary to manage for each one of the output gates a respective waiting queue inside of which the cells occupy a position in function of the arrival order.

Moreover inside of a connection network PON (Passive Optical Network) realized in ATM technology there are termination nodes (ONU Optical Network Units) in which the flow of cells arrive carried by a high speed carrier to be sorted out among outputs of minor speed. In this case the temporary cell storage function turns out necessary to adapt the speed of the arriving cells to the capacity of the carriers on which the cell flows have to be distributed.

Also in this case it turns out necessary to manage for each output interface a respective queue in which the cells occupy a systematic position.

The solution of these problems based on the use of buffer memories contrasts with the necessity to reduce to the minimum the time of passing through the nodes of the network in order to minimize the delay by which the cells join the end user, as well as the variation of the delay itself. Such delay variation called CDV (Cell Delay Variation) constitutes a characterization parameter of the network.

Another significant characteristic in the evaluation of a switching structure is the modularity. Excluding the case of the PON switching network in which the switching structure has only one input with high bit rate and multiple outputs with lower rate, the switching devices have a symmetric structure n x m with n inputs and m outputs with the same bit rate, where the values n and m turn out to be substantial, the frequency and the possibility of using the commutator n x m as a modular element to use for the realization of more complex switching structures.

### Background Art

For the attempt of resolving the problem of temporary ATM cell storage various methods are known which consist in keeping back the cells in temporary memories before forwarding them in output on the space switching network. The used memories present generally FIFO type structures in order to avoid inversions of the cell order. This implies however inconveniences in case a cell entered in the memory could not be switched due to an output conflict. In fact this would block all cells arrived afterwards, even if these last ones were addressed towards available outputs.

It is possible to obviate these inconveniences as described in "Considerations on the Structure of an ATM Switch in the Frame Work of hybrid BB ISDN Concept", by Karl Anton Lutz, published in the documents of IEEE COMSOC International Workshop, November 22-24, Osaka Japan, using an access algorithm to the not purely FIFO memory.

But this requires a considerable increase of the complexity in the control unit.

According to another method described in the memo entitled "The Knockout Switch: a simple modular architecture for high performance packet switching" by Y.S. Yeh and others, published in section B10.2.1 of the documents of the 1987 ISS conference, March 15-20, 1987, Phoenix, Arizona, USA, the cells are switched towards the wanted output through a cross-point type network realized by buses. Such network operates at a speed higher than the nominal one and sufficient to allow in the worst case the reception by an output of a cell arriving from one whatsoever of the inputs. The characteristic to have an operational speed which increases in proportion to the number of inputs and outputs may cause growing difficulties to the increasing of the complexity of the connection network.

A third method, described in the memo entitled "Prelude: An Asynchronous Time-Division Switched Network" by J. Coudreuse and others, published at section 22.2.1 of the documents of the 1987 ICC Conference of June 8, 1987, Seattle, USA, foresees that all cells in arrival are entered in a single common memory and that from this one the cells will be collected, by means of an appropriate control algorithm, already switched to be forwarded to the appropriate output. The memory is therefore understood as an area which each output gate may reach in an absolutely free way. Such memory is therefore shared completely by all output gates.

But each input gate is just able to reach one area it has been assigned to. If this area is filled up the following cells in arrival on the corresponding input cannot occupy other free memory areas assigned to other inputs. Therefore it is not possible to use completely the capacity of the common memory.

It is possible to point out that, with the same performances in terms of probability of loss and with the same traffic conditions, the types of storage realized in the first two solutions require a quantity of memory globally higher than that necessary for the third solution, as the memory is in no way shared neither in input nor in output.

In addition to this it is possible to take into consideration the structures proposed by the article "A Shared Buffer Memory Switch for an ATM Exchange", by Hiroshi Kuwahara and others, published in section 4.4.1 of the documents of the ICC898 Congress, June 11-14, 1989, Boston USA, and by "Switching ATM in a Broadband ISDN", by A.J. Wilwey, published at page 115 of the documents of the Networks 89 congress, Birmingham, Great Britain, in which the storage of the cells allows the access to a same memory area by all input and output flows with a consequent saving regarding the total necessary memory quantity. The realization of the shared access to the memory area is moreover such to free completely the number of inputs and outputs of the element from the cell length. The access is managed by a control body using a second memory area where interlinked lists of pointers at the data memory are realized.

However, these solutions require an operational speed in the second memory area which is at least the double of the one necessary in the data mewmory.

The European patent Nr. 502 873 in the name of the same applicant describes a basic element for a connection network in a fast ATM cell switching node using a memory of the shared type addressable through the content, in which a fraction of the routing tag is memorised together with a code indicating the arrival time sequence of the cells.

Such basic element, even presenting numerous advantages and allowing a very efficient use of the memory, requires for its functioning control elements for the management of the addresses of the locations of the shared memory inside of which the cells will be memorised. These control elements complicate the circuitry of the element itself and make the cost and the difficulties for the realization of the element increase.

EP 378 195, according of which the preamble of the main claim is drafted, discloses a buffer for asynchronous transfer mode communication systems including at least:
- a data register array containing empty data registers and imaginary FIFO queues (shared memory).
- an administrative register array comprises a two port RAM for storing pointers chains specifying the imaginary FIFO queues (pointers manager);
- write-in address registers for indicating addresses in the data register array for the writing of new data (writing pointer);
- read-out address registers for indicating addresses in the data register array for reading data (reading pointer),

As disclosed in column 5, lines 41 to 47, said data register array (10) can be realized by employing a semiconductor random access memory manufactured by using LSI logic.

EP 378 195 discloses therefore an ATM buffer of the type disclosed in EP 502 873 mentioned above, i.e. including a standard data register array (shared memory) and standard external addressing means of said data memory, i.e. pointers (write-in and write-out address registers), and pointers manager (administrative register array). In particular EP 502873 discloses an access to the shared memory through interlinked list of pointers whereas EP 378 195 discloses an access to the shared memory through pointers not interlinked.

The solutions disclosed in EP 378 195 and in EP 502 873 are not adapted to implement in a direct way cell replication functions on different outputs.

With reference to EP 502 873, as described in the italian patent application nr. M193A001550 registered on July 14, 1993 on behalf of the same applicant regarding the carrying out of such functions, additional circuits are necessary.

Moreover said basic element is not adapted to implement in 'a direct way overflow signalling functions towards upstream transmission devices (backpressure signals). As described in the following patent application nr. M192A001231 registered on May 21, 1992 on behalf of the same applicant for the carrying out of such functions further additional circuits are necessary.

All these additional circuits, however simple they may be, increase the realization difficulty of the element.

### Objects of the Invention

A first object of the present invention is to realize a FIFO storage device for ATM type cells allowing an efficient use of the shared memory to be realized in a simple and economic way.

Another object of the present invention is that of implementing in a direct way overflow signalling functions towards upstream transmission devices emitting the so-called backpressure signals.

A further object of the present invention is that of realizing a storage device which is also able to switch on the own outputs the cells received on the own inputs.

A particular object of the invention is the realization of a device allowing an efficient management of the replication functions of the cells required by the multipoint type ATM connections.

### Summary of the Invention

These and other objects are reached through a storage device with shared buffer for connection networks in ATM architectural and applications comprising:
- a plurality of input sections on which input ATM cell flows and associated service signals are travelling;
- a plurality of output sections on which pass respective output ATM cell flows and respective associated service signals are travelling;
- a shared memory adapted to temporary store the input and output cell flows.
   Said storage device is characterized in that said shared memory comprises a series of basic memory elements, each one of those including:
- cell storage means adapted to temporary store an ATM cell, and
- a routing storage unit adapted to memorize the indication of the output sections towards which the ATM cells are directed.

The outputs of each one of said cell memory sections being connected to the inputs of the following memory section as well as connected to all output sections through logic circuits adapted to the transmission of said cell towards an output section only in presence of an indication inside said routing storage unit and of enable signals indicating the absence of ATM cells directed towards the same output section either inside the following memory section or inside all subsequent memory sections.

### Brief Description of the Drawings

The features of the present invention which are believed to be novel are set forth with particularity in the appended claims.

The invention, together with further objects and advantages thereof, may be understood with reference to the following description, taken in conjunction with the accompanying drawings and in which:
- figure 1 shows the link connections of a device according to the present invention;
- figure 2 shows a general structural block scheme of the device according to the invention;
- figure 3 shows in details the structure of one among the memory sections of the device according to the invention.

### Detailed Description of a Preferred Embodiment

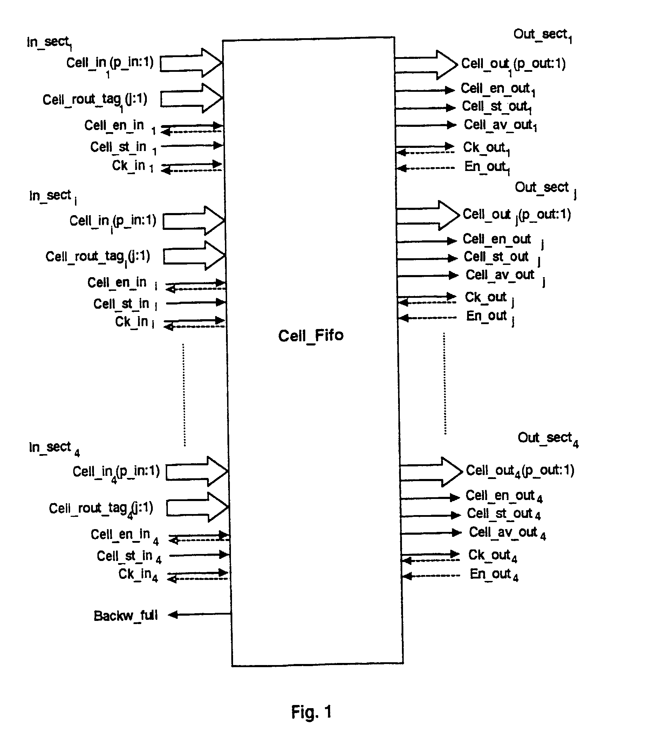

The interface structure of the device according to the present invention as a whole indicated by Cell_Fifo is illustrated by Fig. 1.

The device Cell_Fifo of Fig. 1 comprises according to an illustrative but not limiting description four input interfaces and four output interfaces realizing a switching structure 4x4. In the description the i-th subscript characterizes the input sections and the j-th subscript those of the output.

The four input sections of the device Cell_Fifo are indicated by In_sect₁, In_sect₂, In_sect₃ and In_sect₄, respectively. The generic input section In_sectᵢ is set up by a bus Cell_{_}inᵢ(p_in:1), by a bus Cell_rout_tagᵢ(j:1) with dimensions equal to the number of the output interfaces and by the signals Cell_st_inᵢ, Cell_en_inᵢ and Ck_inᵢ.

On the bus Cell_inᵢ(p_in:1) the device receives the ATM cells set up by 53 bytes arranged by a parallelism p_in mainly linked to the need to reduce the operation frequency of the interface optimizing the number of the interconnections.

On the bus Cell_rout_tagᵢ(j:1) the device Cell_Fifo receives the routing tags related to the cell travelling on the input bus Cell_inᵢ(p_in:1). These routing tags are generated by elements which are not subject of claims, on the basis of the connection map and to the cell identifiers extracted from the header of the ATM cells which define the course of the cells inside the single switching elements.

On the wire Cell_str_inᵢ the device Cell_Fifo receives a start signal of the arriving cells on the bus Cell_inᵢ(p_in:1).

On the wire Cell_en_inᵢ the device Cell_Fifo receives or transmits a enabling signal of the arriving cells on the bus Cell_inᵢ(p_in:1). The direction of the signalling is linked to the codirectional or counter-directional characteristic of the interface.

On the wire CK_inᵢ the device Cell_Fifo receives or forwards a timing signal.

Each input section of the device Cell_Fifo may advantageously include an output Bakw_fullᵢ for the emission of an overflow signal. This signalling called backpressure is addressed to the elements which transmit cells towards the device Cell_Fifo and represents a request of temporary suspension of the cell transmission towards the respective input section.

The four output sections of the device Cell_Fifo are indicated by Out_sect₁, Out_sect₂, Out_sect₃ and Out_sect₄, respectively. The generic output section Out_sectⱼ. is set up by a bus Cell_outⱼ (p_out:1), by the signals Cell_st_outⱼ, Cell_en_outⱼ and Cell_avⱼ. The output section Out_sectⱼ comprises also an input En_outⱼ and an input CK_outⱼ in the case of a counter-directional interface which becomes output in case of a codirectional interface.

The number of input and output sections, which is equal to four in the embodiment of Fig. 1, represents only a preferred embodiment which does not exclude a different number of input and output sections.

On the bus Cell_outⱼ(p_out:1) the device Cell_Fifo transmits ATM cells with a degree of parallelism p_out which may be a priori any, and in general different from the parallelism degree p_in of the input cells.

On the wire Cell_en_outⱼ the device transmits an enabling signal of the cells transmitted on the bus Cell_outⱼ(p_out:1).

On the wire Cell_st_outⱼ the device transmits an enabling signal of the cells transmitted on the bus Cell_outⱼ(p_out:1).

On the wire Cell_av_outⱼ the device Cell_Fifo receives an availability signal to transmit cells on the bus Cell_outⱼ(p_out:1).

On the wire En_outⱼ the device Cell_Fifo receives from the downstream devices a permission signal for the transmission of cells on the bus Cell_outⱼ(p_out:1), a signal which is not present in the case of a codirectional interface.

On the wire CK_outj the device Cell_Fifo receives the timing signal from the downstream devices in the case of a counter-directional interface, or transmits the timing in the case of a condirectional interface.

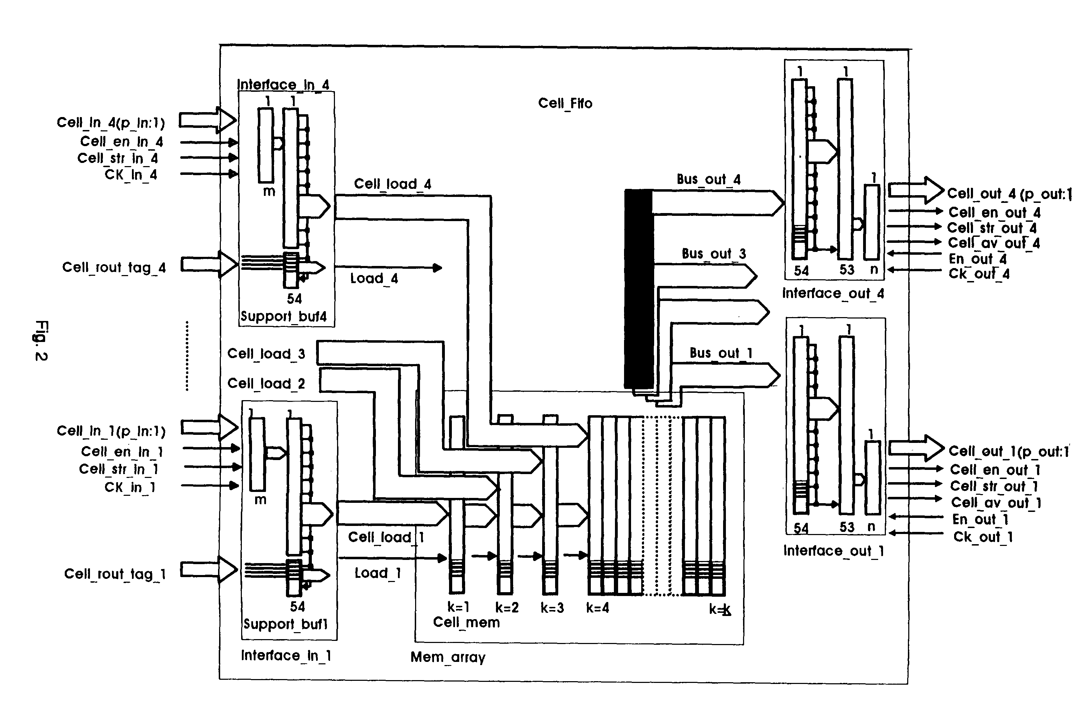

With reference to the enclosed Fig. 2 the structure of the device Cell_Fifo of Fig. 1 will now be illustrated with more details.

To each input section an interface block Interface_inᵢ is associated which, using the control signals of the section, rearranges the input flow on the bus Cell_inⱼ(p_in:1). This flow is memorised on the support buffer Support_buf_inᵢ.

To the cell present at the input the interface block Interface_inᵢ associates a support byte extending the cell to 54 bytes. In the additional byte the contents present on bus Cell_rout_tagᵢ(j:1) constituting the self-routing addressing (routing_tags) of the cells themselves are inserted.

In the described embodiment the insertion of the routing tags uses four of the eight added bits. The remaining four may be used for the insertion of a control on the integrity of the content of the cell in the transfer through the device up to the destination interface. For this aim a parity coding or a coding by means of a CRC may be used.

The blocks Interface_inᵢ transfer the contents of their support buffer Support_buf_inᵢ in a cell cycle in a parallel form to a block Mem_array on the respective bus Cell_loadᵢ enabled by corresponding signals Loadᵢ.

The block Mem_array comprises a number k of storage sections, Cell_memₖ with k taking the values from 1 to k. All the storage sections Cell_memₖ are equal among them, with the exclusion of those with a lower index in number equal to the input interfaces Interface_inᵢ (in Fig. 2 these sections are labelled by Cell_mem₁, Cell_mem₂, Cell_mem₃, Cell_mem₄).

Each one of the storage sections Cell_memₖ has a storage capacity equal to the dimensions of the extended cells created by the blocks Interface_inᵢ.

The inputs of the storage sections Cell_memₖ (Cell_mem₁, Cell_mem₂, Cell_mem₃, Cell_mem₄) of lower range are connected through the buses Cell_loadᵢ to the corresponding interface blocks Interface_inᵢ. Through these connections the cells memorised in the interface blocks Interface_inᵢ may be simultaneously loaded in the block Mem_array.

Each storage section Cell_memₖ is connected to the previous Cell_memₖ₋₁ and to the following one Cell_memₖ₊₁ in such a way to realize a connection of the shift register type.

All storage sections Cell_memₖ setting up the buffer are able, ifenabled, to unload the cells contained in these sections on the busses Bus_outⱼ which convey on the output interfaces Interface_outⱼ the cells arranged in function of the input arrival order at the device Cell_Fifo.

In the representation of Fig. 2 the busses Bus_outⱼ (Bus_out-₁, Bus_out₂, Bus_out₃, Bus_out₄) are connected to the four output sections Interface_outⱼ.

Each output section Interface_outⱼ comprises a storage register of the cells converging in output and a further register which operates as a support to the cell integrity control functions of the received cells as well as their correct routing and even as an adaptation with respect to the two timings of the block Mem_array and as an interface in case the last one is set up by a counter-directional connection.

The output interfaces Interface_outⱼ of the device Cell_Fifo deprive the cells of the additional byte containing the routing indicators and the error identification codifications, and reorganize the flow of cells with a parallelism corresponding to the interface characteristics of the bus Cell_outⱼ(p_out:1).

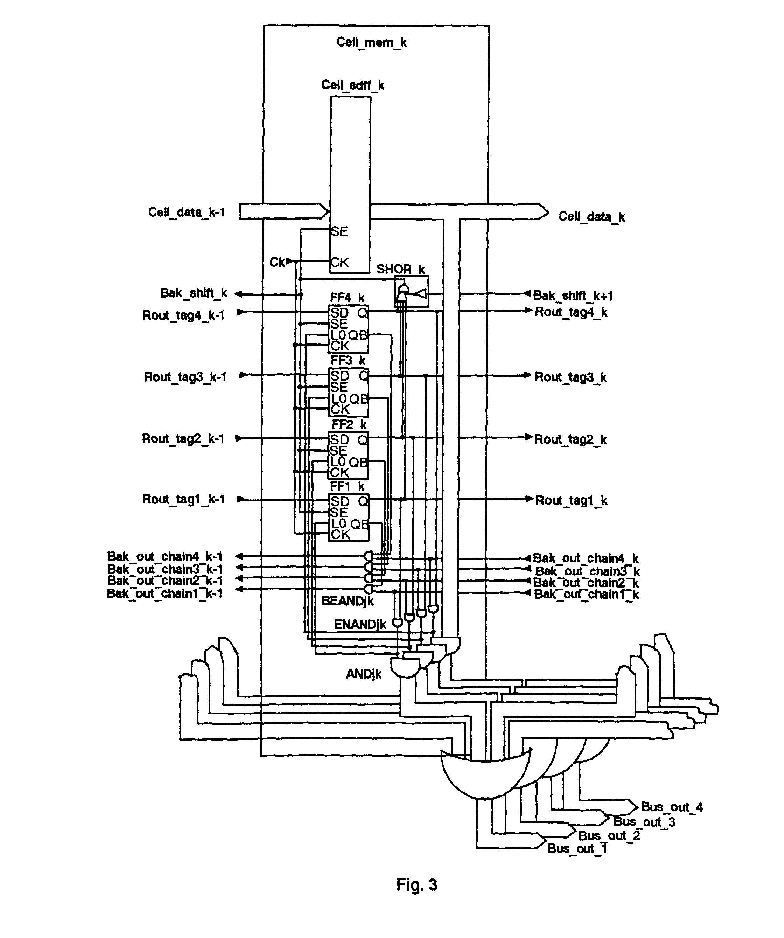

Referring to the alleged Fig. 3 we will now describe in a more detailed way the structure of the memory block MEM_Array and the connections between the memory sections Cell_memₖ which carry out the function of managing the arriving cell queues for each output section.

Fig. 3 represents a generic section k of the block Mem_Array and its interconnections with the contiguous sections marked Cell_memₖ₋₁ and Cell_memₖ₊₁, respectively.

The description of the memory sections will be carried out with reference to the generic k-th memory section marked Cell_memₖ.

The memory section Cell_memₖ comprises a parallel register Cell_sdffₖ with the capacity of 53 bytes.

The inputs of the register Cell_sdffk are connected through the bus Cell_dataₖ₋₁ to the outputs of the register Cell_sdffₖ₋₁ belonging to the previous memory section Cell_memₖ₋₁.

The outputs of the register Cell_sdffk are connected through the bus Cell_dataₖ to the inputs of the register Cell_sdffₖ₊₁ to the following memory section Cell_memₖ₊₁.

The bus Cell_dataₖ is also connected through enable gates to the busses conveying the cells to the output sections Bus_outⱼ. The enabling circuits ANDⱼₖ may be realized through simple logical gates AND provided with a number of inputs and outputs equal to the bit number of the bus Cell_data.

The outputs of the enable gates ANDᵢₖ for values of k from 1 to K are connected to set up the busses Bus_outⱼ. Each one of the busses Cell_data₁, Cell_data₂, Cell_dataₖ turns out to be connected to all four output busses: Bus_out-₁, Bus_out₂, Bus_out₃, Bus_out₄. The form of this connection is linked to the technological implementation.

The elements memorising the routing tag bits are Flip-flops with the possibility of synchronous reset of the content (LO). These Flip-flops marked in Fig. 3 by FFⱼₖ are connected, with signals Rout_tagᵢₖ₋₁, to the Flip-flops of the previous stages, and with signals Rout_tagᵢₖ₊₁ to the Flip-flops of the next stages to setup shift registers equal in number to the output sections of the device Cell_Fifo.

The shift registers set up by the storage elements FF represent the managing structure of the chains towards the output interfaces. The Flip-flops FFⱼₖ contain as a whole the state of the queue related to the output interface Interface_outⱼ.

In the memory block Mem_array the cells arriving from the input interfaces are inserted in the sections Cell_memₖ of a lower order.

As it will become clearer hereafter, the cells are forwarded together with their routing_tags through all sections of the unit Mem_array.

The Flip_flops FFⱼₖ with the subscripts k of higher order presenting an active (set) memorised routing_tag identify for each chain the cells having had the longest latency in the buffer. These cells are the first to be extracted and routed in output on the respective output interfaces Interface_outⱼ.

The signals Bak_out_chainⱼₖ arriving from the following Cell_memₖ₊₁ are active (1 in Booleancode) if there is no cell in the sections of the higher order addressed to the corresponding j-th queue.

In this case, if the content of the flip-flop FFⱼₖ is active, the logic AND of the two signals Bak_out_chainⱼₖ and Rout_tagⱼₖ on the gate ENANDⱼₖ generates the enable on gate ANDjₖ connecting the bus Cell_dataₖ to the bus Bus_outⱼ which conveys the cells to the output sections.

The same signal Bak_out_chainⱼₖ of the following section put in the logic AND on gate BEANDⱼₖ with the inverted content of the Flip-flop FFⱼₖ constitutes the enable Bak_out_chainⱼₖ₋₁ assigned to the previous section.

While the section Cell_memₖ is routing the cell contained in it the signal Bak_out_chainⱼₖ₋₁ turns out not to be active (o in Booleancode) In this way it prevents the lower order sections at their time with contents of the FF_{jy}, where y<k, from routing the cells contained in them to the bus Bus_outⱼ.

In case the signal Bak_out_chainⱼₖ is not active this would indicate that in the higher order sections there is a cell with a longer latency addressed to the corresponding queue.

In this case the contents of the section Cell_memₖ and of the lower order sections will not be routed and remain in the buffer waiting for the exhaustion of the corresponding queue.

If an enable signal Bak_out_chainⱼₖ arrived from the following section Cell_memₖ₊₁ and the content of FFⱼₖ were void, the gate ENANDⱼₖ would not enable the routing of the content of the section Cell_memₖ, because it is addressed to another output interface or because it is void (no active routing tag). The gate BEANDⱼₖ would extend in this case the enabling sending a signal Bak_out_chainⱼₖ₋₁ and so on for all previous sections until the section of higher order with Flip-flop containing a routing_tag.

The routing tag signals Rout_tagⱼₖ₋₁ of the corresponding section Cell_memₖ are used after the routing to reset the content of the Flip-flops FFⱼₖ acting on the reset input LO of the Flip-flops themselves.

Setting to zero the content of the j-th Flip-flop FFⱼₖ the cell contained in the section Cell_memₖ will be withdrawn from the j-th queue.

A logic OR (SHORₖ) reveals the presence of zero contents in the Flip-flops FFⱼₖ and prepares the cell register Cell_sdffₖ for the loading of the content of the previous register Cell_sdffₖ₋₁ connected through the bus Cell_dataₖ₋₁.

Therefore, if all Flip-flops FFⱼₖ of the section Cell_memₖ present not active routing_tags, or if the cell contained in it has already been routed on all the interfaces to which it was addressed, the cell contained in the section Cell_memₖ will be withdrawn from the buffer.

This enable to the shifting function of the registers will be extended to all sections with a lower index compared to that in which the routing_tags have been cancelled out realizing in this way a regrouping of the buffer and a transfer of the contents towards the sections with a higher index.

The signal Bak_shiftₖ is the signal supplied by the section Cell_memₖ to the previous section Cell_memₖ₋₁ putting the last one in shifting mode. Analogously the signal Bak_shiftₖ₊₁ is the signal transmitted by the following section Cell_memₖ₊₁ putting the same section Cell_memₖ in shifting.

Considering the generic memory section k and the j-th queue, the logic controlling the routing is set up by the Flip-flops FFⱼₖ and by the gates ENANDⱼₖ, BEANDⱼₖ and ANDⱼₖ, while the regrouping logic of the memory is only set up by the gate SHORₖ.

The shift number turning out to be enabled simultaneously in a cycle is equal to the number of memory locations cancelled during the previous cycle.

As inside of a memory cycle a maximum number of memory locations equal to the number of output sections may be cancelled, the maximum number of shifts which may occur during a cycle is equal to the number of output sections.

It will be possible to appreciate that this corresponds in a normal memory management scheme to relocate in a unique cycle the locations having become available.

If this did not happen, the missed regrouping of the memory inside of an access cycle would make grow the occupied part of the block Mem_Array up to degenerate with the filling up of the whole memory.

The sections Cell_memₖ with lower index, characterized by null routing_tag bits are in the enabled shift condition, therefore the ATM cells inserted in the block Mem_Array will be rapidly forwarded towards sections with higher index, even being always available for the routing starting from their entry in the block Mem_Array.

The description which has been made regarding the memory section Cell_memₖ is valid under the condition of varying the index k for all sections of the memory block Mem_Array with the exception of the last section and the first sections with k= 1,2 ...i.

The last section with k=k is, regarding the structure, equal to the previous ones. The input connection Bak_shift is permanently disabled while the qualification inputs Bak_out_chainⱼ of the last section are on the contrary permanentlyenabled. The bus Cell_dataₖ is only connected to the gates ANDᵢₖ as well as the routing indications corresponding to the section memorised in the Flip-flops FFᵢₖ are only connected to the gates ENANDᵢₖ and BEANDᵢₖ.

The first i sections Cell_memₖ present, as shown in Fig 2, two input connection busses, one is the bus Cell_dataₖ connecting the different sections in a shift register structure, the other one is a bus connecting the section k=i with the buffer Support_bufᵢ of the input section Interface_inᵢ.

These busses Cell_loadᵢ make it possible to load in a single cell period in the buffer Mem_Array cells, which may present themselves simultaneously on the i input interfaces of-the device Cell_Fifo.

The timing of all registers Cell_sdffₖ and of all flip-flops FFⱼₖ of all sections Cell_memₖ is given by the same clock signal (not shown in the figure), as also the qualifications are common, which time the shifting operations of the registers and the cancelling of the routing_tags according to the relation existing between the main clock signal and the cell period, or of the degree of parallelism marked by p_in on the input interfaces.

The device Cell_Fifo operates as follows.

The device Cell_Fifo acquires on its input sections Interface_inᵢ cells of 53 bytes supplied by the respective vectors containing i routing_tag bits. These routing_tags will be memorised together with the cell to set up the extended cell passing through the device.

A cell cycle, once the extended cell is received by the input section Interface_inᵢ and memorised here, will be transferred through the bus Cell_loadᵢ to the corresponding section Cell_memₖ (k=i) among those with lower index of the block Mem_array accompanied by an enable Loadj.

Always within a cell period further to the loading of the new cell arrived from the input section transfer operations of the contents from one storage section to the following one will be enabled in number equal to the major one among the number of the input and output interface sections.

Memorised in the block Mem_array the cell will be inserted inside the waiting queues of the memorised cells towards the output interfaces, the set routing bits identify, if the cell is a multicasting cell, the queues in which the cell itself will be inserted.

At the run out of the chains due to the effect of cancellation of the cells supplied to the output and of the regrouping realized through the shifting of the contents inside the block Mem_array, the cell runs through. all sections Cell_memₖ until it reaches the end of the queue to be carried to the output section.

The enables for the transmission of the cells are organized in a plurality of priority chains (of the daisy-chain type), each one corresponding to a different output.

For each output the only enable to be actuated is the one corresponding to the memory section of major index, i.e. corresponding to the cell having accumulated the major latency in the block Mem_Array.

In this way inside of one and the same shared memory several Fifos are realized, one for each output with variable depth and containing ATM cells.

The contents which will be addressed in sequence on one and the same output section are related to memory sections which, even not being necessarily contiguous in the physical sense, are on the contrary contiguous in the subset set up by the cells to be addressed towards to that same output section.

Thanks to a similar structure also the replication of one and the same cell on several outputs happens in a very simple way.

In case of multipoint connections the ATM cell, at the moment of the memorization, will be associated to a routing_tag with the activated bits relative to the different channels to which it is addressed. Such cell, even if it will be memorised in only one memory section, turns out inserted in a number of queues equal to the output sections towards which it is addressed, and its latency inside the block Mem_Array is determined by the running out of the queues themselves.

As a further advantage turns out the fact, that a cell directed towards several outputs can reach simultaneously all outputs without no variation in the access times to the memory section.

In a preferred but not shown embodiment the device Cell_Fifo comprises means for the analysis of the instant state of filling of the block Mem_Array starting from the analysis on the state of the routing_tag flip-flops of the block Mem_Array.

Such means can easily supply indications about the global occupation state of the block Mem_Array, or they can also supply the state of occupation of the individual queues.

Such means can be used in an advantageous way to supply in case of overcoming an occupation threshold to supply a backpressure signal towards the devices which transmit towards the device Cell_Fifo.

The device Cell_Fifo may preferably be provided with an additional not shown logic which calculates a code CRC on the 53 bytes of the ATM cell and on the routing_tag bits.

Such CRC code may advantageously be inserted into the remaining bits setting up the content of the extended memorised cell. The recalculating of such code CRC carried out on the extracted cells in each output section controls, further to the correctness of the cell content, the correct functioning of all memory sections passed through by the cell before its routing.

In this way an always active Built-in self test controlling all memory sections during the functioning.

The advantages of the invention are evident.

The control circuits of the memory sections do not comprise pointer registers or machine set up according to the philosophy of states, but they are set up by elementary logic gates.

This implies a significantly reduced price of realization compared to all solutions described in the mentioned known technology.

Moreover there is no criticality in the time of access to the registers, as, in whatsoever condition, the timings are connected to the cell period related to the interface with higher speed. Inside of such period the block Mem_Array carries out elementary operations (shifts) by number equal to the maximum between the number of inputs and outputs.

The structure of the device according to the present invention is suitable to realize devices Cell_Fifo provided with the most different numbers of inputs and outputs. To realize for example a device with 16 inputs and the same number of outputs it would have been sufficient to use 16 blocks Interface_in/out, each one with 16 flip_flops for the routing control logic and to increase from 54 (53+1) to at least 55 bytes (53+2, 2bytes=16bits) the dimensions of the extended cells memorised in the support buffer and of each section of the memory Mem_Array.

A further significant advantage of the device according to the invention consists in the fact that the depth of the buffer is not linked to powers of 2, but it may be whatsoever. This often may make significant savings possible in the use of the memory. On the contrary all devices described in the mentioned known technology have this problem.

In the case of multipoint connections the device Cell_Fifo does not foresee the re-copying of the cells: the same content is simply routed towards the output interfaces in different times or simultaneously after the running out of the individual chains. The only variation compared to a point-to-point connection consists in the possible longer latency of the cell inside the device.

If there were not the implementation of a Built-in-self-test logic, the structure of the shift register type of the buffer Mem_Array would be suitable for the application of testing methods with scan-insertion.

The Analysis of the occupation state of the buffers as well as the emission of backpressure signallings (even separate for each single routing) can be managed by a contained increase of the logic.

While a particular embodiment of the present invention has been shown and described, it should be understood that the present invention is not limited thereto since other embodiments may be made by those skilled in the art without departing from the true scope thereof. It is thus contemplated that the present invention encompasses any and all such embodiments covered by the following claims.

## Claims

1. FIFO storage device with shared buffer for connection networks in ATM architectural and applications comprising:
• a plurality of input sections (Interface_inᵢ) on which input ATM cell flows (Cell_inᵢ(p_in:1) and associated service signals (Cell_en_inᵢ, Cell_str_inᵢ, Cell_rout_tagᵢ, Ck_inᵢ) are travelling;
• a plurality of output sections (Interface_outⱼ) on which pass respective output ATM cell flows (Out_sectⱼ(p_out:1) and respective associated service signals (Cell_en_outⱼ, Cell_str_outⱼ, Cell_avⱼ, En_outⱼ and Ck_outⱼ) are travelling;
• a shared memory (Mem_array) adapted to temporary store the input and output flows,
characterized in that said shared memory (Mem_array) comprises a series of basic memory elements, each one of those including:
• cell storage means (Cell_sdffₖ) adapted to temporary store an ATM cell, and,
• a routing storage unit (FFⱼₖ) adapted to memorize the indication of the output sections towards which the ATM cells are directed,
the outputs (Cell_dataₖ) of each one of said cell memory sections (Cell_memₖ) being connected to the inputs of the following memory section (Cell_memₖ₊₁ ), as well as (Cell_dataₖ) connected to all output sections (Interface_outⱼ) through logic circuits (ANDⱼₖ, ENANDⱼₖ) adapted to the transmission of said cell towards an output section only in presence of an indication inside said routing storage unit (FFⱼₖ) and of enable signals (Bak_out_chainⱼₖ) indicating the absence of ATM cells directed towards the same output section either inside the following memory section (Cell_memₖ₊₁) or inside all subsequent memory sections.

2. Device according to claim 1, characterized in that each one of said input sections (Interface_inᵢ) is directly connected (Cell_loadᵢ, Loadᵢ) to a corresponding memory section (Cell_memⱼ) among the first memory sections of said memory block (Mem_array).

3. Device according to claim 1, characterized in that each one of said memory sections (Cell_memₖ) comprises means (ENANDⱼₖ) to update the content of said routing memorization unit (FFⱼₖ) at each transmission of the memorised cell inside said cell memorization unit (Cell_sdffₖ) towards an output section.

4. Device according to claim 1, characterized in that each one of said memory sections (Cell_memₖ) comprises logic circuits (SHORₖ) connected to said routing memorization unit (FFⱼₖ) and connected through a shift signal (Bak_shiftₖ₊₁) to the following memory section (Cell_sdffₖ₊₁), and that said logic circuits (SHORₖ) cause the transfer (Cell_dataₖ₋₁, Rout_tagⱼₖ₋₁) of the contents of the previous memory section (Cell_memₖ₋₁) inside said memory section (Cell_memₖ) when said routing memorization unit (FFⱼₖ) indicates that the ATM cell memorised in said memory section (Cell_memₖ) has already been transmitted towards all the output sections towards which it was directed, or when said shift signal (Bak_shiftₖ₊₁) indicated that the following memory section (Cell_memₖ₊₁) has re-copied inside of itself the content of the memory section (Cell_memₖ₊₁) in question.

5. Device according to claim 1, characterized in that each one of said memory sections (Cell_memₖ) comprises also means (BEANDₖ) to extend the enable for the routing (Bak_out_chainₖ₋₁) towards the previous memory sections up to the section of higher order the routing memorization unit of which (FFₖ) contains a routing tag

6. Device according to claim 1, characterized in that each one of said input sections (Interface_inᵢ) comprises means to associate additional support bytes to each cell of said input ATM cell flow, said additional support bytes comprising routing_tags corresponding to the output sections (Interface_outⱼ) towards which each ATM cell must be transmitted.

7. Device according to claim 6, characterized in that each one of said output sections (Interface_outⱼ) comprises means to remove said additional support bytes inserted by said input sections (Interface_inᵢ)

8. Device according to claim 1, characterized in that said cell storage unit of said memory section (Cell_memₖ) is set up by a parallel register (Cell_sdffₖ) with the capacity of 53 bytes.

9. Device according to claim 1, characterized in that said routing memorization unit of said memory section (Cell_memₖ) is set up by a number of Flip-flops (FFⱼₖ) equal to the number of output sections (Interface_outⱼ), each one of said Flip-flops (FFⱼₖ) being provided with an input (LO) for the synchronous reset of the content.

10. Device according to the previous claims, characterized in that it comprises also means for the analysis of the instant filling state of the above-mentioned memory block (Mem_array).

11. Device according to claim 10, characterized in that said means for the analysis of the instant filling state of the above-mentioned memory block are also suitable to provide a backpressure signal when the above-said filling state exceeds a predetermined threshold.

12. Switching device comprising a shared buffer according to any of claims 1 to 11.

## Patentansprüche

1. FIFO-Speicher-Vorrichtung mit gemeinsamem Puffer für Verbindungsnetze in ATM-Architektur und Anwendungen, bestehend aus:
• eine Anzahl von Eingangsabschnitten (Interface_inᵢ), über die zugeführte ATM-Zellenströme (Cell_inᵢ(p_in:1) und zugehörige Dienstsignale laufen (Cell_en_inᵢ, Cell_str_inᵢ, Cell_rout_tagᵢ, Ck_inᵢ);
• ein Anzahl von Ausgangsabschnitten (Interface_outⱼ), über die ATM-Zellenströme laufen bzw. ausgegeben werden (Out_sectⱼ(p_out:1) und zugehörige Dienstsignale laufen (Cell_en_outⱼ, Cell_str_outⱼ, Cell_avⱼ, En_outⱼ and Ck_outⱼ);
• einen Speicher für gemeinsamen Zugriff (Mem_array), konzipiert für die Zwischenspeicherung der Eingangs- und Ausgangsströme,
dadurch gekennzeichnet, dass der besagte Speicher für gemeinsamen Zugriff (Mem_array) aus einer Reihe von Speicher-Grundelementen besteht, von denen jedes Folgendes enthält:
• ein Mittel zur Zellenspeicherung (Cell_sdffₖ), konzipiert für die Zwischenspeicherung einer ATM-Zelle, und,
• eine Routing-Speichereinheit (ffⱼₖ), konzipiert zum Speichern der Angabe der Ausgangsabschnitte, zu denen die ATM-Zellen geroutet werden,
wobei die Ausgänge (Cell_dataₖ) jedes der besagten Zellenspeicherabschnitte (Cell_memₖ) mit den Eingängen des nachfolgenden Speicherabschnitts (Cell_memₖ₊₁) sind, wobei weiterhin (Cell_dataₖ) über Logikschaltungen (ANDⱼₖ, ENANDⱼₖ) mit allen Ausgangsabschnitten (Interface_outⱼ) verbunden sind, wobei die besagten Logikschaltungen so konzipiert sind, dass eine Übertragung der besagten Zelle hin zu einem Ausgangsabschnitt erfolgt, und zwar nur dann, wenn innerhalb des besagten Routing-Speichereinheit (FFⱼₖ) ein Hinweis dafür vorliegt und außerdem Freigabesignale (Bak_out_chainⱼₖ) vorhanden sind, die die Abwesenheit von solchen ATM-Zellen anzeigen, welche zum selben Ausgangsabschnitt entweder im nachfolgenden Speicherabschnitt (Cell_memₖ₊₁) oder in sämtlichen nachfolgenden Speicherabschnitten hin geführt werden müssen.

2. Eine Vorrichtung gemäß Anspruch 1, dadurch gekennzeichnet, dass jeder der besagten Eingangsabschnitte (Interface_inᵢ) direkt (Cell_loadᵢ, Loadᵢ) mit einem zugehörigen Speicherabschnitt (Cell_memⱼ) unter den ersten Speicherabschnitten des besagten Speicherblocks (Mem_array) verbunden ist.

3. Eine Vorrichtung gemäß Anspruch 1, dadurch gekennzeichnet, dass jeder der besagten Speicherabschnitte (Cell_memₖ) Mittel (ENANDⱼₖ) enthält, um den Inhalt der besagten Routing-Speichereinheit (FFⱼₖ) bei jeder Übertragung der gespeicherten Zelle innerhalb der besagten Zellen-Speichereinheit (Cell_sdffₖ) hin zu einem Ausgangsabschnitt zu aktualisieren.

4. Eine Vorrichtung gemäß Anspruch 1, dadurch gekennzeichnet, dass jeder der besagten Speicherabschnitte (Cell_memₖ) Logikschaltungen (SHORₖ) enthält, die mit der besagten .Routing-Speichereinheit (FFⱼₖ) verbunden sind, und mittels eines Schiebesignals (Bak_shiftₖ₊₁) mit dem nachfolgenden Speicherabschnitt (Cell_sdffₖ₊₁) verbunden ist, und dass die besagten Logikschaltungen (SHORk) die Übertragung (Cell_dataₖ₋₁, Rout_tagⱼₖ₋₁) der Inhalte des vorhergehenden Speicherabschnitts (Cell_memₖ₋₁) innerhalb des besagten Speicherabschnitts (Cell_memₖ) auslösen, wenn die besagte Routing-Speichereinheit (FFⱼₖ) anzeigt, dass die in dem besagten Speicherabschnitt (Cell_memₖ) gespeicherte Zelle bereits zu allen Ausgangsabschnitten gesendet worden ist, auf die ihre Adressierung weist, oder wenn das besagte Schiebesignal (Bak_shiftₖ₊₁) anzeigt, dass der nachfolgende Speicherabschnitt (Cell_memₖ₊₁) in seinem Innern has den Inhalt des fraglichen Speicherabschnitts (Cell_memₖ₊₁) kopiert hat.

5. Eine Vorrichtung gemäß Anspruch 1, dadurch gekennzeichnet, dass jeder der besagten Speicherabschnitte (Cell_memₖ) außerdem Mittel (BEANDₖ) enthält, um die Freigabe für das Routing (Bak_out_chainₖ₋₁) in Richtung zu den vorhergehenden Speicherabschnitten hin zu erweitern, und zwar bis zu demjenigen Speicherabschnitt höherer Ordnung, dessen Routing-Speichereinheit (FFₖ) eine Routing-Markierung enthält.

6. Eine Vorrichtung gemäß Anspruch 1, dadurch gekennzeichnet, dass jeder der besagten Eingangsabschnitte (Interface_inᵢ) Mittel enthält, um jeder Zelle des besagten ATM-Zellen-Eingangsstroms zusätzliche Hilfsbytes hinzuzufügen, wobei die besagten Hilfsbytes Routing-Markierungen enthalten, welche den Ausgangsabschnitten (Interface_outⱼ) entsprechen, zu denen hin die betreffende ATM-Zelle übertragen werden muss.

7. Eine Vorrichtung gemäß Anspruch 6, dadurch gekennzeichnet, dass jeder der besagten Ausgangsabschnitte (Interface_outⱼ) Mittel enthält, um die besagten zusätzlichen, von den besagten Eingangsabschnitten (Interface_inᵢ) eingefügten Hilfsbytes zu entfernen.

8. Eine Vorrichtung gemäß Anspruch 1, dadurch gekennzeichnet, dass die besagte Zellen-Speichereinheit des besagten Speicherabschnitts (Cell_memₖ) von einem Parallelregister (Cell_sdffₖ) mit einer Kapazität von 53 Byte gebildet wird.

9. Eine Vorrichtung gemäß Anspruch 1, dadurch gekennzeichnet, dass die besagte Routing-Speichereinheit des besagten Speicherabschnitts (Cell_memₖ) von einer Anzahl von Flipflops (FFⱼₖ) gebildet wird, die gleich der Anzahl der Ausgangsabschnitte (Interface_outⱼ) ist, wobei jedes der besagten Flipflops (FFⱼₖ) einen Eingang (LO) zum synchronen Rücksetzen des Inhalts besitzt.

10. Eine Vorrichtung gemäß den vorhergehenden Ansprüchen, dadurch gekennzeichnet, dass sie außerdem Mittel für die Analyse des aktuellen Belegungszustands des oben erwähnten Speicherblocks (Mem_array) enthält.

11. Eine Vorrichtung gemäß Anspruch 10, dadurch gekennzeichnet, dass besagte Mittel für die Analyse des aktuellen Belegungszustands des oben erwähnten Speicherblocks außerdem dazu geeignet sind, ein Rückstau-Signal zu liefern, wenn der vorerwähnte Belegungszustand eine vordefinierten Grenzwert überschreitet.

12. Eine Vermittlungsvorrichtung, die einen Speicher für gemeinsamen Zugriff gemäß irgendeinem der Ansprüche 1 bis 11 enthält.

## Revendications

1. Dispositif de mémoire premier entré premier sorti à tampon partagé pour réseaux de connexion à architecture MTA et ses applications, comprenant :
• une pluralité de sections d'entrée (Interface_inᵢ) sur lesquelles des flux de cellules MTA d'entrée (Cell_inᵢ(p_in:1) et des signaux de service associés (Cell_en_inᵢ, Cell_str_inᵢ, Cell_rout_tagᵢ, Ck_inᵢ) circulent ;
• une pluralité de sections de sortie (Interface_outⱼ) sur lesquelles des flux respectifs de cellules MTA de passe (Out_sectⱼ(p_out:1) et les signaux de service associés respectifs (Cell_en_outⱼ, Cell_str_outⱼ, Cell_avⱼ, En_outⱼ et Ck_outⱼ) circulent ;
• une mémoire partagée (Mem_array) adaptée au stockage temporaire des flux d'entrée et de sortie,
caractérisé en ce que ladite mémoire partagée (Mem_array) comprend une série d'éléments de mémoire de base, chacun de ceux-ci comportant :
• des moyens de stockage de cellules (Cell_sdffₖ) adaptés au stockage temporaire d'une cellule MTA, et
• une unité de stockage de routage (FFⱼₖ) adaptée à la mémorisation de l'indication des sections de sortie vers lesquelles les cellules MTA sont dirigées,
les sorties (Cell_dataₖ) de chacune desdites sections de mémoire de cellule (Cell_memₖ) étant connectées aux entrées de la section de mémoire suivante (Cell_memₖ₊₁), ainsi que (Cell_dataₖ) connectées à toutes les sections de sortie (Interface_outⱼ) par des circuits logiques (ANDⱼₖ, ENANDⱼₖ) adaptés à la transmission de ladite cellule vers une section de sortie uniquement en présence d'une indication dans ladite unité de stockage de routage (FFⱼₖ) et de signaux de validation (Bak_out_chainⱼₖ) indiquant l'absence de cellules MTA dirigées vers la même section de sortie soit dans la section de mémoire suivante (Cell_memₖ₊₁) soit dans toutes les sections de mémoire suivantes.

2. Dispositif selon la revendication 1, caractérisé en ce que chacune desdites sections d'entrée (Interface_inᵢ) est directement connectée (Cell_loadᵢ, Loadᵢ) à une section de mémoire correspondante (Cell_memᵢ) parmi les premières sections de mémoire dudit bloc de mémoire (Mem_array).

3. Dispositif selon la revendication 1, caractérisé en ce que chacune desdites sections de mémoire (Cell_memₖ) comprend des moyens (ENANDⱼₖ) pour actualiser le contenu de ladite unité de mémorisation de routage (FFⱼₖ) à chaque transmission de la cellule mémorisée dans ladite unité de mémorisation de cellule (Cell_sdffₖ) à une section de sortie.

4. Dispositif selon la revendication 1, caractérisé en ce que chacune desdites sections de mémoire (Cell_memₖ) comprend des circuits logiques (SHORₖ) connectés à ladite unité de mémorisation de routage (FFⱼₖ) et connectés par un signal de décalage (Bak_shiftₖ₊₁) à la section de mémoire suivante (Cell_sdffₖ₊₁), et en ce que lesdits circuits logiques (SHORₖ) provoquent le transfert (Cell_dataₖ₋₁, Rout_tagⱼₖ₋₁) des contenus de la section de mémoire précédente (Cell_memₖ₋₁) dans ladite section de mémoire (Cell_memₖ) quand ladite unité de mémorisation de routage (FFⱼₖ) indique que la cellule MTA mémorisée dans ladite section de mémoire (Cell_memₖ) a déjà été transmise à toutes les sections de sortie vers lesquelles elle a été dirigée, ou quand ledit signal de décalage (Bak_shiftₖ₊₁) indiquait que la section de mémoire suivante (Cell_memₖ₊₁) a re-copié en elle-même le contenu de la section de mémoire (Cell_memₖ₊₁) en question.

5. Dispositif selon la revendication 1, caractérisé en ce que chacune desdites sections de mémoire (Cell_memₖ) comprend aussi des moyens (BEANDₖ) pour étendre la validation du routage (Bak_out_chainₖ₋₁) aux sections de mémoire précédentes jusqu'à la section d'ordre plus élevé dont l'unité de mémorisation de routage (FFₖ) contient une étiquette de routage.

6. Dispositif selon la revendication 1, caractérisé en ce que chacune desdites sections d'entrée (Interface_inᵢ) comprend des moyens pour associer des octets auxiliaires supplémentaires à chaque cellule dudit flux de cellules MTA d'entrée, lesdits octets auxiliaires supplémentaires comprenant des routing_tags correspondant aux sections de sortie (Interface_outⱼ) auxquelles chaque cellule MTA doit être transmise.

7. Dispositif selon la revendication 6, caractérisé en ce que chacune desdites sections de sortie (Interface_outⱼ) comprend des moyens pour enlever lesdits octets auxiliaires supplémentaires insérés dans lesdites sections d'entrée (Interface_inᵢ).

8. Dispositif selon la revendication 1, caractérisé en ce que ladite unité de stockage de cellule de ladite section de mémoire (Cell_memₖ) est constituée par un registre parallèle (Cell_sdffₖ) d'une capacité de 53 octets.

9. Dispositif selon la revendication 1, caractérisé en ce que ladite unité de mémorisation de routage de ladite section de mémoire (Cell_memₖ) est constituée par un nombre de bascules (FFⱼₖ) égal au nombre de sections de sortie (Interface_outⱼ), chacune desdites bascules (FFⱼₖ) étant pourvue d'une entrée (LO) pour la remise à zéro synchrone du contenu.

10. Dispositif selon les revendications précédentes, caractérisé en ce qu'il comprend également des moyens pour l'analyse de l'état instantané de remplissage du bloc de mémoire précité (Mem_array).

11. Dispositif selon la revendication 10, caractérisé en ce que lesdits moyens d'analyse de l'état instantané de remplissage du bloc de mémoire précité conviennent également pour fournir un signal de retenue quand l'état de remplissage précité excède un seuil prédéterminé.

12. Dispositif de commutation comprenant un tampon partagé selon l'une quelconque des revendications 1 à 11.
